# EUROPEAN PATENT APPLICATION

(11) **EP 3 865 804 A1**
(43) Date of publication of application: **18.08.2021**
(21) Application number: 20156951.4
(22) Date of filing: 12.02.2020
(51) Int. Cl.: F28D 20/00

(54) **THERMAL ENERGY STORAGE DEVICE**

(71) Applicant: Siemens Gamesa Renewable Energy GmbH & Co. KG, 20097 Hamburg (DE)
(72) Inventor: Niemeyer, Helen, 21073 Hamburg (DE); Ostwald, Alexander, 22083 Hamburg (DE); Raether, Wulf, 22763 Hamburg (DE)
(74) Representative: Aspacher, Karl-Georg

(57) **Abstract**

A thermal energy storage (100) for a thermal energy storage plant comprising a hollow housing (110) a granular material (120) for storing heat housed in the hollow housing (110). At least a storage grate (20) retains the granular material (120) inside the hollow housing (110), the storage grate (20) extending between a first end (11) and a second end (12), the first end (11) being closer to the bottom side (114) than to the top side (113), the storage grate (20) including at least a first grate section (20a) including the first end (11) and a second grate section (20b) including the second end (12), each grate section (20a, 20b) of the storage grate (20) comprises at least a first plurality of struts (51, 41, 42), the struts (51, 41, 42) being configured and arranged in each grate section (20a, 20b) in such a way that the mechanical strength of the first grate section (20a) is higher than the mechanical strength of the second grate section (20b).

## Description

### Field of invention

The present invention relates to a storage device for storing thermal energy.

### Art Background

It is known to store fluctuating electrical energy as heat inside thermal energy storages. The electrical energy may be generated in renewable and/or traditional power plants running on fossil fuels. The electrical energy from such plants is stored in heat storages when the electricity demand is low. The stored heat is reconverted back to electrical energy in times when the demand is higher than the production. The heat storages are usually part of thermal energy storage plants. A thermal storage plant may include for example a heater, a steam generator, a steam turbine, a heat transporting fluid, a storage material inside the heat storage and a piping system. The storage material may be a granular material, for example comprising a plurality of stones. The granular material is housed inside a hollow housing extending between an inlet and an outlet. The inlet and an outlet need to be open to allow the flowing of a heat transporting fluid, which exchanges heat with the granular material. It is known to provide grated structures at the inlet and outlet of the heat storage to contain the granular material inside the hollow housing of the heat storage. The thermo-mechanical forces originating from the storage material may require thick and heavy grated structures to be constructed to withstand such forces and contain the storage material inside the hollow housing. Thick and heavy grated structures may be associated with undesired manufacturing complexity, costs and weight of the heat storage. The choice of the grate material is also limited due to the high operating temperatures of the storage of around 750°C. Materials, i.e. metals, able to withstand these temperatures while retaining acceptable values in strength and other properties are expensive. As a result, these materials further contribute to raise the manufacturing costs, particularly for storages of great dimensions.

There may be a need for providing a heat storage device having optimized grated structures, in order that the thermo-mechanical forces originating from the storage material are controlled as much as possible to avoid the above-mentioned inconveniences.

### Summary of the Invention

This need may be met by the subject matter according to the independent claim. Advantageous embodiments of the present invention are described by the dependent claims.

According to the invention there is provided a heat storage for a thermal energy storage plant, the heat storage comprising:
a hollow housing comprising a plurality of housing sides and at least two openings respectively defining an inlet and an outlet of the hollow housing, the hollow housing defining a fluid passage for the circulation of a heat transporting fluid between at least two openings and through the granular material,
a granular material for storing heat housed in the hollow housing between the inlet and the outlet, the plurality of housing sides comprising at least a bottom side and a top side the granular material being disposed in the hollow housing such that the weight force of the granular material is directed from the top side to the bottom side,
wherein at least one of said openings is provided with a storage grate for retaining the granular material inside the hollow housing, the storage grate extending between a first end and a second end, the first end being closer to the bottom side than to the top side, the storage grate including at least a first grate section including the first end and a second grate section including the second end, each grate section of the storage grate comprises at least a first plurality of struts, the struts being configured and arranged in each grate section in such a way that the mechanical strength of the first grate section is higher than the mechanical strength of the second grate section.

As "granular material" it is meant any conglomerate of discrete solid elements or particles, for example stones or rocks, having a convenient thermal capacity for storing thermal energy at a desired temperature range. The discrete solid elements which constitute the granular material may be a spheroidal shape or polyhedral shape, for example comprising a plurality of flat surfaces and/or curved surfaces. For example, the discrete solid elements may be crushed rocks of non-symmetrical random shapes. As "heat transporting fluid" it is meant any suitable fluid for transporting thermal energy, for example air.

As "mechanical strength" it is meant the ability of a structural element, like the storage grate as above described, to withstand the stress induced by physical forces, for example the weight force of the granular material.

The above-described storage grates are designed for the actual forces locally acting on respective areas, i.e. on respective grate sections, of the grate rather than considering the peak force experienced by the grate and defining a constant mechanical strength to be applied to the complete grate from the first end to the second end. This results in smaller overall dimensions and weight for the grate. Advantageously the required material and therefore also costs are reduced.

According to embodiments of the present invention, the struts have a higher thickness in the first grate section than in the second grate section. In these embodiments, the mechanical strength of the sections is controlled by controlling the thickness of the struts.

According to other embodiments of the present invention, the distance between the struts is smaller in the first grate section than in the second grate section. In these embodiments, the mechanical strength of the sections is controlled by controlling the distance between struts.

According to other embodiments of the present invention, the struts have a higher mechanical strength in the first grate section than in the second grate section. In these embodiments, the mechanical strength of the sections is controlled by controlling the mechanical strength of the struts themselves.

According to embodiments of the present invention, the storage grate may include three or more grate sections. The storage grate may include at least a third grate section, the mechanical strength of the third grate section being intermediate between the mechanical strength of the first grate section and of the second grate section.

According to embodiments of the present invention, at least a storage section of the storage grate comprises a first plurality of struts having a first thickness and at least a second plurality of struts attached to first plurality of struts and having a second thickness lower than the first thickness. Additionally, the storage grate may comprise at least a further third plurality of struts attached to the first plurality of struts or to the second plurality of struts, the third plurality of struts having a third thickness lower than the first thickness and/or the second thickness. Alternatively to the third plurality of struts, the storage grate may comprise a sheet of perforated metal attached to the first plurality of struts or to the second plurality of struts, the sheet of perforated metal providing a plurality of passages for the heat transporting fluid which have smaller dimensions than the distance between two struts of the first plurality of struts or of the second plurality of struts.

Using different pluralities of struts with varying thicknesses is another method to reduce the required material. By providing a first plurality of main struts the thickness of the remaining struts can be reduced because the forces acting on the struts is redirected onto the main struts. The possible deflection of struts is restricted by the support of the set of struts they are placed upon, again resulting in a reduced thickness. Further, dividing the grate into multiple sections reduces the strut lengths as a single strut does not have to cover the whole grate area. This simplifies the manufacturing process for the storage grate, which results in lower costs.

According to embodiments of the present invention, the thickness of the storage grate is greater at the first end than at the second end.

According to other embodiments of the present invention, at least one of the grate sections has a constant average thickness. As "constant average thickness" it is meant an average of the thickness of the grate section calculated along the direction from the first end to the second end. In such calculation the contribution of different sections with and without struts are considered. Alternatively, at least one of the grate sections may have a variable average thickness decreasing from the first end towards the second end.

According to embodiments of the present invention, the storage grate covers the entire opening at the inlet and/or at the outlet of the storage. For example, the first end of the storage grate may be attached to the bottom wall and the second end may be attached to the top wall. Alternatively, the first end and the second end of the storage grate may be attached to a supporting frame extending between the entire opening at the inlet and/or at the outlet of the storage.

The above described embodiments may be conveniently applied to thermal energy storages where the fluid passage is horizontally oriented between the at least two openings and the storage grate, provided at least at one of the openings, is orthogonal to the fluid passage and/or parallel to the weight force of the granular material. Alternatively, the above described embodiments may be conveniently applied to thermal energy storages where the fluid passage is not horizontally oriented, but where the presence of storage grates to retain the granular material inside the hollow housing is required.

The aspects defined above and further aspects of the present invention are apparent from the examples of embodiment to be described hereinafter and are explained with reference to the examples of embodiment. The invention will be described in more detail hereinafter with reference to examples of embodiment but to which the invention is not limited.

### Brief Description of the Drawing

- Fig. 1: shows a schematic front view of a component of a thermal energy storage according to the present invention,
- Fig. 2: shows a schematic sectional view according to a vertical sectional plane of a thermal energy storage, according to a first exemplary embodiment of the present invention,
- Fig. 3: shows a schematic sectional view according to a vertical sectional plane of a thermal energy storage, according to a second exemplary embodiment of the present invention,
- Fig. 4: shows a schematic sectional view according to a vertical sectional plane of a thermal energy storage, according to a third exemplary embodiment of the present invention,
- Fig. 5: shows a schematic sectional view according to a vertical sectional plane of a thermal energy storage, according to a fourth exemplary embodiment of the present invention,
- Fig. 6: shows a schematic sectional view according to a vertical sectional plane of a thermal energy storage, according to a fifth exemplary embodiment of the present invention.

### Detailed Description

The illustrations in the drawings are schematic. It is noted that in different figures, similar or identical elements are provided with the same reference signs.

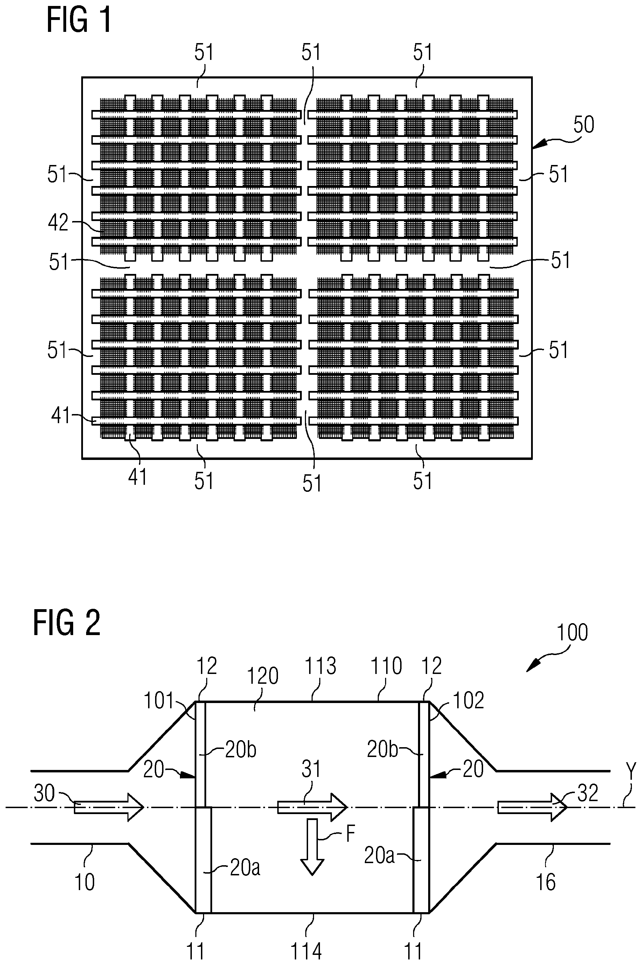

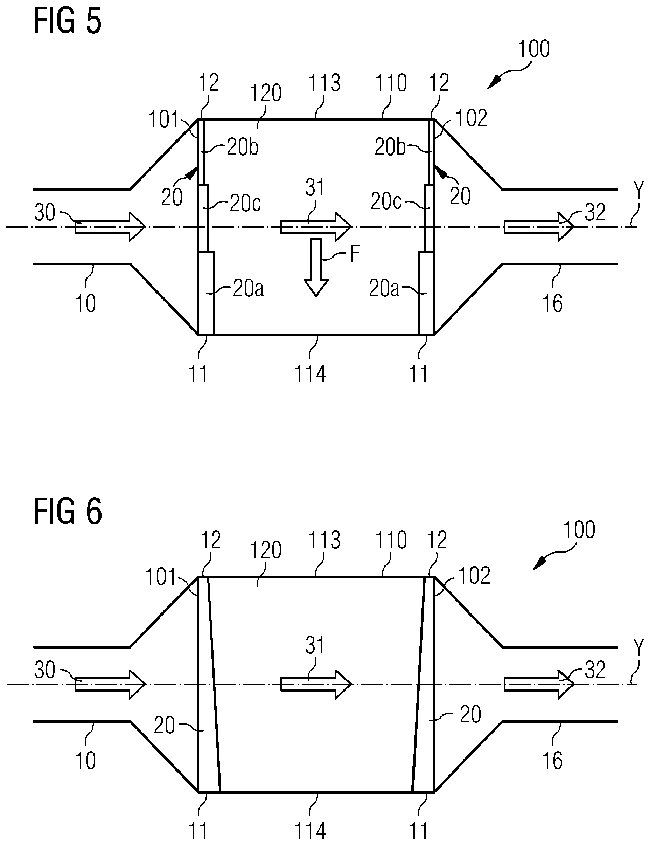

**Figure 1** schematically shows a front view of a grate section according to the present invention, which is to be used in heat storage 100 for a thermal energy storage plant, as better detailed in the following with reference to the figure 2 to 6. Each grate section consists of a metallic rectangular substrate grate 50 having a first plurality of main grate struts 51, having a first thickness. The first plurality of main grate struts 51 in the embodiment of figure 6 include six struts: four border struts 51 along the four sides of the rectangular grate 50, so as to constitute a border frame, and two center struts 51 crossing in the center of the grate 50, each of the two center struts 51 being parallel to two respective border struts 51. The rectangular grate 50 may comprise a second plurality of struts 41 attached to first plurality of struts 51 and having a second thickness lower than the first thickness. The thinner struts 41 of the second plurality are attached to the inner faces of the main struts 51 or over the struts 51 of the first plurality, on the side of the storage grate 20 contacting the storage material 120 or on the opposite surface side facing the inlet duct 10 or on both sides. The rectangular grate 50 may further comprise a further third plurality of struts 42 attached to the second plurality of struts 41, the third plurality of struts 42 having a third thickness lower than the second thickness. The third plurality of struts 42 are placed on the gaps between the struts 41 of the second plurality and on the gaps between the struts 41 and the main struts 51. The third plurality of struts 42 may be also placed directly over the main struts 51 of the first plurality. The second plurality of struts may be configured as a sheet of perforated metal 42 attached to the first plurality of struts 51 or to the second plurality of struts 41. The sheet of perforated metal 42 provides a plurality of passages for the heat transporting fluid which have smaller dimensions than the distance between two struts of the first plurality of struts 51 or of the second plurality of struts 41. The superposing of the above described sequence of struts having decreasing thickness, or eventually of sheet of perforated metal, defines a plurality of respective flow passages characterized by decreasing dimensions.

The struts 51, 41, 42 are configured and arranged in the grate section in such a way that a desired mechanical strength of the grate section is provided. The desired mechanical strength may be reached by choosing a convenient thickness of the struts 51, 41, 42 and/or a convenient distance between the struts 51, 41, 42 and/or a convenient mechanical strength of the struts 51, 41, 42.

Only a limited number of struts (first plurality) requires a high thickness, whereas the other struts (second and optional third plurality and further pluralities of struts) can have a lower thickness since a substantial portion of the forces acting on these struts is redirected into the main struts of the first plurality. This principle can be repeated multiple times, with each set of struts having smaller dimensions than the set of struts they are placed upon.

**Figure 2** schematically shows a horizontally disposed heat storage 100 for a thermal energy storage plant (not shown as whole). The heat storage 100 comprises a hollow housing 110 extending longitudinally along a longitudinal axis Y. The hollow housing 110 comprises a plurality of housing sides 113, 114 including a bottom side 114, a ceiling top side 113 and a plurality of lateral sides connecting the ceiling and bottom sides 113, 114. The housing sides 113, 114 may be planar or curved. The housing sides 113, 114 may be structured as walls. The ceiling top side 113 may be shaped as a wall or as a flexible cover. The hollow housing 110 comprises a first opening 101 and a second opening 102 respectively defining an inlet and an outlet of the hollow housing 110, at the two opposite longitudinal ends of the hollow housing 110. According to other embodiments of the present invention (not shown) the hollow housing 110 comprises a plurality of inlet and/or outlet openings. A granular material 120 for storing heat is housed in the hollow housing 110 between the inlet 101 and the outlet 102. The granular material 120 comprises a plurality of discrete solid elements or particles, for example stones or rocks, having a convenient thermal capacity for storing thermal energy at a desired temperature range. The granular material 120 is disposed in the hollow housing 110 such that the weight force F of the granular material 120 is directed from the top side 113 to the bottom side 114. The hollow housing 110 defines a fluid passage 31 for the circulation of a heat transporting fluid between the inlet 101 and the outlet 102 and through the granular material 120. The fluid passage 31 is mainly oriented along longitudinal axis Y. The heat transporting fluid may be air or any other fluid heat transfer medium. At the inlet 101 and the outlet 102 two storage grates 20 are respectively provided for retaining the granular material 120 inside the hollow housing 110, along the longitudinal direction Y. The storage grate 20 is oriented parallel to the weight force F of the granular material 120, i.e. the storage grate 20 is oriented vertically. According to other embodiments (not shown) the storage grate 20 may be not oriented vertically. The discrete solid elements or particles forming the granular material 120 subject to their weight force generate forces at the inlet 101 and the outlet 102 which are respectively directed towards the storage grates 20. The granular material 120 is further retained inside the hollow housing 110 along a transversal direction by the housing sides(s). The two storage grates 20 in figure 1 are identical. According to another embodiment of the present invention (not shown), the two storage grates 20 are different from each other. The heat transporting fluid enters the heat storage 100 at the inlet 101 after flowing (as indicated by the arrow 30 of figure 1) in an inlet duct 10 connected to the inlet 101, passes through the storage grate 20 at the inlet 101, further through the granular material 120 (as indicated by the arrow 31) passes through the second storage grate 20 at the outlet 102, leaving the heat storage 100 through an outlet duct 16 (as indicated by the arrow 32). Each of the storage grates 20 extends between a first end 11 and a second end 12, the first end 11 being closer to the bottom side 114 than to the top side 113. Particularly, as shown in figure 1, the first end 11 may be attached to the bottom side 114 and the second end 12 is attached to the top side 113. Alternatively, the first 11 end and the second end 12 of the storage grate 20 may be attached to a supporting frame (not shown) extending between the entire opening 101, 102 at the inlet and/or at the outlet of the storage. The thickness of the storage grate 20 is greater at the first end 11 than at the second end 12. The storage grate 20 includes at least a first grate section 20a including the first end 11 and a second grate section 20b including the second end 12. Each grate section 20a, 20b of the storage grate 20 corresponds to the grate section of figure 1, comprising at least the first plurality of struts 51. The first grate section 20a has a first constant thickness and the second grate section 20b has a second constant thickness, which is smaller than the first thickness. The "thickness" of the grate which is intended is the maximum thickness or the average thickness, considering both the substrate grate 50 and the struts 51. The additional thickness of the first grate section 20a with respect to the second grate section 20b is added towards the inside of the hollow housing 110, i.e. on the side contacting the storage material 120. Therefore, the surface of the storage grate 20 contacting the storage material 120 has a discontinuity in the form of a step, while the opposite surface facing the inlet duct 10 or the outlet duct 16 is continuous. The struts 51, 41, 42 are configured and arranged in the grate sections 20a, 20b in such a way that the mechanical strength of the first grate section is higher than the mechanical strength of the second grate section.

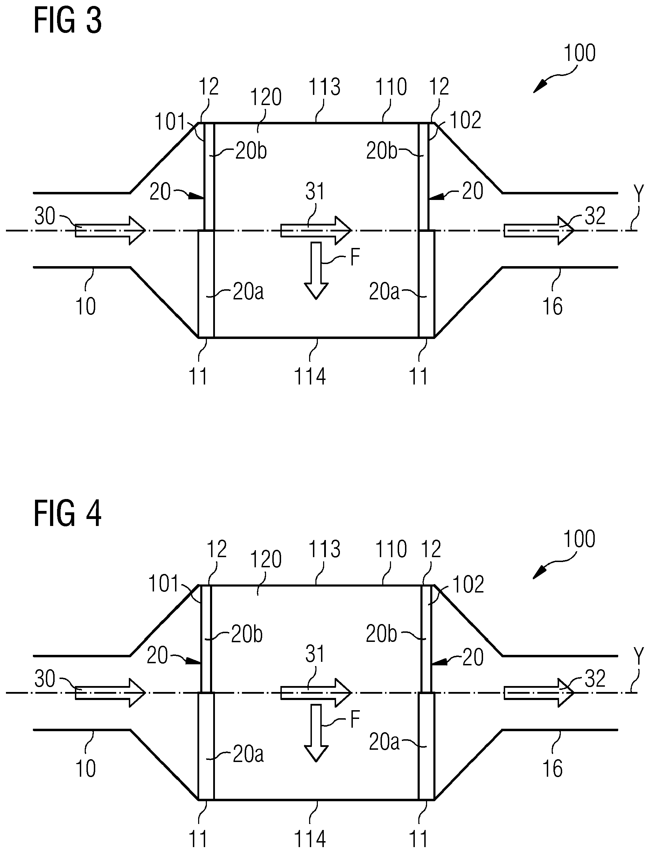

**Figure** 3 schematically shows a second embodiment for a horizontal heat storage 100 according to the present invention. The heat storage 100 of the second embodiment differentiates itself from the heat storage 100 of the first embodiment in that the additional thickness of the first grate section 20a with respect to the second grate section 20b is added towards the outside of the hollow housing 110, i.e. on the side facing the inlet duct 10 or the outlet duct 16. Therefore, the surface of the storage grate 20 contacting the storage material 120 is continuous, while the opposite surface facing the inlet duct 10 or the outlet duct 16 has a discontinuity.

**Figure 4** schematically shows a third embodiment for a horizontal heat storage 100 according to the present invention. The heat storage 100 of the third embodiment differentiates itself from the heat storage 100 of the first and the second embodiment in that the additional thickness of the first grate section 20a with respect to the second grate section 20b is added both towards the inside and the outside of the hollow housing 110. Therefore, both the surfaces of the storage grate 20 contacting the storage material 120 and the opposite surface facing the inlet duct 10 or the outlet duct 16 have a respective discontinuity.

**Figure 5** schematically shows a fourth embodiment for a horizontal heat storage 100 according to the present invention. The heat storage 100 of the fourth embodiment differentiates itself from the heat storage 100 of the other above-described embodiments in that each storage grate 20 comprises three grate sections 20a, 20b, 20c, the third grate section 20c being intermediate between the first grate section 20a and the second grate section 20b. The third grate section 20c has a third constant thickness, which is smaller than first thickness and greater than the second thickness.

The struts 51, 41, 42 are configured and arranged in the grate sections 20a, 20b, 20c in such a way that the mechanical strength of the first grate section is higher than the mechanical strength of the third grate section, which is higher than the mechanical strength of the second grate section.

The additional thicknesses of the first grate section 20a and the third grate 20c with respect to the second grate section 20b are added towards the inside of the hollow housing 110, i.e. on the side contacting the storage material 120, similarly to the first embodiment of figure 1. According to another embodiment of the present invention (not shown), the additional thicknesses of the first grate section 20a and the third grate 20c with respect to the second grate section 20b are added towards the outside of the hollow housing 110, i.e. on the side facing the inlet duct 10 or the outlet duct 16, similarly to the second embodiment of figure 2. According to another embodiment of the present invention (not shown), the additional thicknesses of the first grate section 20a and the third grate 20c with respect to the second grate section 20b are added both towards the outside and the inside of the hollow housing 110, similarly to the third embodiment of figure 3. According to other embodiments of the present invention (not shown), each storage grate 20 may comprise more than three grate sections distributed with decreasing thickness from the first end 11 to the second end 12.

**Figure 6** schematically shows a fifth embodiment for a horizontal heat storage 100 according to the present invention.

The heat storage 100 of the fifth embodiment differentiates itself from the heat storage 100 of the other above-described embodiments in that the storage grate 20 comprises a single grate section having a variable thickness decreasing from the first end 11 towards at the second end 12. Therefore, both the surfaces of storage grate 20 contacting the storage material 120 and the opposite surface facing the inlet duct 10 or the outlet duct 16 are continuous. The storage grate 20 of the fifth embodiment may be regarded as the storage grate 20 of the fourth embodiment, where instead of three or more grate sections having constant but decreasing thicknesses from the first end 11 to the second end 12, there are provided a plurality of sections with continuously decreasing thickness from the first end 11 to the second end 12.

The application of grates with the presented designs is not limited to horizontally oriented thermal energy storages. It may also be used in storages where the flow direction is vertical. In such embodiment the openings may be vertically oriented but disposed on a lateral side at the bottom of the thermal energy storage. The inlet or outlet at the bottom of the storage would experience high forces as a result of the gravitational forces acting on the storage material. The above described geometry may be conveniently applied to storage grates applied on the inlet or outlet at the bottom of the thermal energy storage.

## Claims

1. A thermal energy storage (100) for a thermal energy storage plant, the thermal energy storage (100) comprising:
a hollow housing (110) comprising a plurality of housing sides (113, 114) and at least two openings (101, 102) respectively defining an inlet and an outlet of the hollow housing (110), the hollow housing (110) defining a fluid passage (31) for the circulation of a heat transporting fluid between the at least two openings (101, 102) and through the granular material (120),
a granular material (120) for storing heat housed in the hollow housing (110) between the inlet (101) and the outlet (102), the plurality of housing sides (113, 114) comprising at least a bottom side (114) and a top side (113), the granular material (120) being disposed in the hollow housing (110) such that the weight force (F) of the granular material (120) is directed from the top side (113) to the bottom side (114),
wherein at least one of said openings (101, 102) is provided with a storage grate (20) for retaining the granular material (120) inside the hollow housing (110), the storage grate (20) extending between a first end (11) and a second end (12), the first end (11) being closer to the bottom side (114) than to the top side (113), the storage grate (20) including at least a first grate section (20a) including the first end (11) and a second grate section (20b) including the second end (12), each grate section (20a, 20b) of the storage grate (20) comprises at least a first plurality of struts (51, 41, 42), the struts (51, 41, 42) being configured and arranged in each grate section (20a, 20b) in such a way that the mechanical strength of the first grate section (20a) is higher than the mechanical strength of the second grate section (20b).

2. The thermal energy storage (100) according to claim 1, wherein the struts (51, 41, 42) have a higher thickness in the first grate section (20a) than in the second grate section (20b).

3. The thermal energy storage (100) according to claim 1 or 2, wherein the distance between struts (51, 41, 42) is smaller in the first grate section (20a) than in the second grate section (20b).

4. The thermal energy storage (100) according to any of the previous claims, wherein the struts (51, 41, 42) have a higher mechanical strength in the first grate section (20a) than in the second grate section (20b).

5. The thermal energy storage (100) according to any of the previous claims, wherein the storage grate (20) includes at least a third grate section (20c), the mechanical strength of the third grate section (20c) being intermediate between the mechanical strength of the first grate section (20a) and of the second grate section (20b).

6. The thermal energy storage (100) according to any of the previous claims, wherein at least a grate section (20a, 20b, 20c) of the storage grate (20) comprises a first plurality of struts (51) having a first thickness and at least a second plurality of struts (41) attached to first plurality of struts (51) and having a second thickness lower than the first thickness.

7. The thermal energy storage (100) according to claim 6, wherein said grate section (20a, 20b, 20c) of the storage grate (20) comprises at least a further third plurality of struts (42) attached to the first plurality of struts (51) or to the second plurality of struts (41), the third plurality of struts (42) having a third thickness lower than the first thickness and/or the second thickness.

8. The thermal energy storage (100) according to claim 6, wherein said grate section (20a, 20b, 20c) of the storage grate (20) comprises at least a sheet of perforated metal (42) attached to said struts (41, 51), the sheet of perforated metal (42) providing a plurality of passages for the heat transporting fluid which have smaller dimensions than the distance between two struts of the first plurality of struts (51) or of the second plurality of struts (41).

9. The thermal energy storage (100) according to any of the previous claims, wherein the storage grate (20) has a variable thickness between the first end (11) and the second end (12) .

10. The thermal energy storage (100) according to claim 9, wherein the thickness of the storage grate (20) is greater at the first end (11) than at the second end (12).

11. The thermal energy storage (100) according to any of the previous claims, wherein at least a grate section (20a, 20b, 20c) of the storage grate (20) is oriented parallel to the weight force (F) of the granular material (120).

12. The thermal energy storage (100) according to any of the previous claims, wherein the first end (11) is attached to the bottom side (114) and the second end (12) is attached to the top side (113).
